# EUROPÄISCHE PATENTSCHRIFT

(11) **EP 1 270 320 B1**
(45) Veröffentlichungstag und Bekanntmachung des Hinweises auf die Patenterteilung: **29.12.2010**
(21) Anmeldenummer: 02012769.2
(22) Anmeldetag: 10.06.2002
(51) Int. Cl.: B60Q 1/068

(54) **Kraftfahrzeugleuchte, vor allem Nebelscheinwerfer**
Vehicle lights particularly fog lamp
Feux de véhicule, en particulier phare antibrouillard

(30) Priorität: 20.06.2001 SI 200100167
(43) Veröffentlichungstag der Anmeldung: 02.01.2003
(73) Patentinhaber: Hella KGaA Hueck & Co., 59552 Lippstadt (DE)
(72) Erfinder: Bernat, Borut, 1000 Ljubljana (SI); Lovsin, Joze, 1317 Sodrazica (SI); Pticak, Peter, 1000 Ljubljana (SI); Zidar, Alojz, 1295 Ivancna Gorica (SI); Kleinschmidt, Gert, 59555 Lippstadt (DE); Urbschat, Ulrich, 59510 Lippetal-Lippborg (DE)

(56) Entgegenhaltungen:
- EP-A- 0 224 739
- EP-A- 0 330 884
- EP-A- 0 512 793
- DE-A1- 19 546 271
- DE-C1- 3 238 104
- JP-A- 2000 153 733

## Beschreibung

Die Erfindung betrifft eine Leuchte für Kraftfahrzeuge nach dem Oberbegriff des Patentanspruchs 1.

Die Erfindung basiert auf dem Problem, ein unifiziertes Lichtmodul in einen Nebelscheinwerfer oder eine ähnliche Leuchte für Kraftfahrzeuge einzubauen.

Es ist bekannt, dass Kraftfahrzeuge mit Leuchten ausgerüstet werden und dass beim Einbau von diesen mindestens drei Aspekte beachtet werden sollen. Der erste Aspekt ist, dass die eingebauten Leuchten optische Forderungen erfüllen sollten, d.h. entsprechende Beleuchtungsstärke des genau bestimmten Bereiches sollte in der Nähe des Fahrzeugs gewährleistet sein. Der zweite Aspekt ist, dass der Leuchteteil, der nach Außen sichtbar ist, mindestens die Gestaltungsforderungen erfüllen und der Form des Fahrzeugs, in welches er eingebaut wird, angepasst werden sollte. Der dritte Aspekt ist mit dem Aspekt der Konstruktion verbunden und bezieht sich nur auf den Einbau der Leuchte in das Fahrzeug. Auf einer Seite sollte sie zuverlässig sein und auf der Anderen sollte sie eine richtige Positionierung der Leuchte zwecks der Möglichkeit der Sicherung von oben genannten optischen Charakteristiken ermöglichen.

Auf einer Seite ist ein Teil der Beleuchtungsausrüstung vom Fahrzeug bestimmt, wie z.B. vordere Scheinwerfer und Heckleuchten, zumindest, wenn sie die Positionsleuchte und Bremsleuchten, im selben Gehäuse einschliessβen. Der Teil ist unerlässlich gestaltet und absolut zweckmäßig für einen bestimmten Fahrzeugtyp durchgeführt. Auf der anderen Seite ist ein Teil von der Beleuchtungsausrüstung bestimmt, vor allem die Leuchte fürs Fahren im Nebel, die sogenannten Nebelscheinwerfer, Zusatzbremsleuchten, Zusatzpositionsleuchten, Zusatzleuchte fürs Rückwärtsfahren u. ä. Grundsätzlich könnte dieser Teil der Beleuchtungsausrüstung unifiziert bzw. so konzipiert werden, dass eine und dieselbe Leuchte für den Einbau in verschiedene Fahrzeugtypen und sogar in die verschiedene Bestandteile der Fahrzeuge geeignet wäre. Dabei ist daran gedacht, dass es z. B. mit einem Nebelscheinwerfer mit bestimmten optischen Charakteristiken und einer bestimmten Form ihrer von außen sichtbaren Bereichen möglich ist, ihn in die Fahrzeuge von verschiedenen Herstellern und sogar in verschiedene Bestandteile der Fahrzeuge einzubauen, z.B. in eine Stoßstange, einen Kotflügel, Spoiler o. ä. Was in diesem Zusammenhang in der Regel problematisch ist, ist die Positionierung der Leuchte wegen der Sicherung von optischen Charakteristiken der Leuchte, die in das Fahrzeug eingebaut wird, und zwar in bezug auf die Lage des Fahrzeugs. Die Unifizierung von solchen Leuchten allein ist eine sehr rationale Maßnahme, die im Vergleich mit der Herstellung von absolut zweckmäßigen Leuchten für bestimmte Fahrzeugtypen auch eine ganze Reihe von bedeutenden Vorteilen bietet, vor allem geht es hier um die Minderung von Herstellungskosten von wesentlich höheren Mengen, unvergleichbar leichtere und preiswertere Wartung von Fahrzeugen wegen viel besserer Verfügbarkeit bzw. Erreichbarkeit von Ersatzteilen bei Verminderung von Vorräten u. ä. Aber die Unifizierung von Leuchten ist mit einem bis jetzt ungelösten Problem der Sicherung von der Konstruktionsart des Leuchteinbaus auf jeweils verfügbare Stelle am Fahrzeug und der folgenden Positionierung verbunden. Bei jedem Fahrzeugtyp sollte eigentlich diese Sicherung die Erreichung von entsprechenden bzw. verlangten optischen Charakteristiken ermöglichen. Die Leuchten werden in die Fahrzeuge von verschiedenen Herstellern auf verschiedene Art und Weise eingebaut. Bestimmte Hersteller bauen z.B. Nebelscheinwerfer in Kotflügel, andere in Stoßstangen und dritte in Spoiler ein. Bei den Fahrzeugen von bestimmten Herstellern erfolgt die Positionierung von der Außenseite des Fahrzeugs, bei den Anderen von der Innenseite. In bezug auf die Vielfältigkeit von Fahrzeugen sollte unter Berücksichtigung von optischen Charakteristiken der Leuchten, die in jedes Fahrzeug eingebaut werden, mit verschiedenen Leuchteinbauarten gerechnet werden; z. B. mit vielfältiger Konfiguration von Stellen für Leuchteinbau und mit verschiedener Zugänglichkeit von diesen Stellen wegen des Einbaus und der Positionierung von Leuchten.

So ist aus der EP 0 466 034 A1 eine Leuchte bekannt, die für den Einbau in eine entsprechende Eintiefung vorgesehen ist. Zu diesem Zweck sollte eine Vertiefung in einer vorderen Stoßstange des Fahrzeugs im Voraus vorbereitet werden. Die Leuchte wird mit einem Rahmen ausgerüstet und so konzipiert, dass nach dem Einbau der Rahmen in die Ebene der Stoßstange geschoben wird. Für die Wechsel-, Reparatur- und Wartungsbedürfnisse kann der Rahmen später bis zu einem bestimmten Maß auch ausgezogen werden. Damit würde auch die Abdrehung der Leuchte wegen des Wechsels der Glühlampe oder der ganzen Leuchte oder ähnlichen Maßnahmen möglich. Generell befasst sich diese Lösung nicht mit der Positionierung der Leuchte und ermöglicht keine Lösung des Problems, das in der Einleitung genannt wurde.

Auf der anderen Seite ist z.B. aus der US 4,731,713 ein Nebelscheinwerfer bekannt, für welchen vor allem optische Charakteristiken eines von vorne in das Gehäuse einbaubarem Lichtmoduls (der untere Teil vom Querschnitt ist paraboloidmäßig, der obere Teil elliptisch, wobei die Brennweite und der Brennpunkt von den beiden Teilen gemeinsam sind) charakteristisch sind. Gleichzeitig ist die Leuchte mit koaxial in der Querrichtung der Leuchte jeder zu sich selbst herausragenden Lagerungseinsätzen ausgerüstet, die die Positionierung der Leuchte im Sinne der Leuchteneigung in bezug auf ihre horizontale Ebene ermöglichen. Die zuletzt erwähnte Tatsache bedeutet, dass es während des Einbaus in ein jeweils verfügbares Fahrzeug möglich ist, die Leuchte in die Höhe einzustellen. Wie es dem Patentanmelder bekannt ist, wird das mit dem Eindrehen von vier Schrauben erreicht. Obwohl schon diese Maßnahme ein wenig breitere Einbaumöglichkeiten in bezug auf die Vielfältigkeit von Fahrzeugen im Vergleich mit der oben zitierten Lösung bedeutet, ist unter Berücksichtigung der Vielfältigkeit von verschiedenen möglichen Stellen und Zugängen zu den Befestigungsstellen bei verschiedenen Fahrzeugen das vorweg genannte Problem damit noch nicht gelöst.

Aus der DE 195 46 271 A1 ist eine Leuchte für Kraftfahrzeuge mit einem Gehäuse bekannt, in dem ein Lichtmodul über Befestigungsösen bzw. Lagerungsösen befestigt ist. Zur Verstellung des Lichtmoduls um eine Achse ist ein Regulierungsaggregat vorgesehen, das im Wesentlichen aus einer Regulierungsschraube und einem fest mit dem Lichtmodul verbundenen, Zähne aufweisenden Kranz aufweist. Nachteilig an der bekannten Leuchte ist, dass der Ort der Lichtmodulverstellung durch den direkten Gewindeeingriff zwischen dem Kranz und der Regulierungsschraube fest vorgegeben ist.

Aufgabe der Erfindung ist es, dass eine Positionierung des Lichtmoduls auf einfache Weise für verschiedene Leuchteinbauarten gewährleistet ist.

Die Erfindung löst das Problem mit den Merkmalen des Patentanspruchs 1.

Nach der Erfindung ist die Kraftfahrzeugleuchte, vor allem der Scheinwerfer, aus dem Gehäuse wie auch aus einem in das Gehäuse einsetzbarem Lichtmodul zusammengesetzt. Fachlich wird sie oft auch Scheinwerfer oder Lichteinheit genannt. Das Gehäuse ist mit Befestigungsösen oder ähnlichen Elementen für die Leuchtebefestigung auf jeweils entsprechende Stelle am Fahrzeug wie auch mit diametral gegenüber angeordneten Lagerungsösen ausgerüstet. Das Lichtmodul ist mit einem in der Richtung rückwärts bzw. seitlich vom Gehäuse reichenden rohrförmig ausgebildeten Kranz ausgerüstet und schließt zwei diametral gegenüber angeordnete und zu sich selbst herausragende und in der genannten Lagerungsösen des Gehäuses in der selben Achse aufstellbare Lagerungseinsätze ein. Zwischen dem Gehäuse und dem Lichtmodul ist eine wie ein O-Ring konzipierte rollbewegliche Dichtung vorgesehen. Und an der Stelle des Leuchtumfangs außer des Bereichs der Einstellung von Lagerungsösen des Gehäuses und Lagerungseinsätzen vom Lichtmodul ist ein Regulierungsaggregat für die Neigung des Lichtmoduls in bezug auf das Gehäuse rund um die Achse, sich erstreckend durch die Lagerungsösen des Gehäuses und Lagerungseinsätze des Lichtmoduls vorgesehen.

Laut Erfindung ist in der Richtung seitlich vom Gehäuse der laufende Kranz des Lichtmoduls auf seiner Innenoberfläche mit longitudinal laufenden Zähnen verzahnt bzw. ausgerüstet ist und wenn das Regulierungsaggregat mindestens aus einer Regulierungsschraube, Regulierungsmutter und einem Einrastungseinsatz zusammengebaut ist. Der Einrastungseinsatz schließt sich im Aufliegen am Kranz des Lichtmoduls an und rastet hinter der Einrastungstreppe des genannten Kranzes der gegenseitigen Bewegung der Regulierungsschraube und Regulierungsmutter ein.

Es ist vor allem vorteilhaft, wenn am Kranz des Lichtmoduls, vorzugsweise an seiner zylindrischen Innenoberfläche, diametral gegenüber befindende verzahnte Gebiete symmetrisch angeordnet sind, und zwar in bezug auf die Achse, sich erstreckend durch die Lagerungsösen des Gehäuses und Lagerungseinsätze des Lichtmoduls, wie auch in bezug auf die Achse, die rechteckig zu der oben genannten Achse ist und auch dann, wenn die genannten verzahnten Gebiete mindestens ein Drittel des Kranzumfangs bedecken. Dabei werden sie symmetrisch auf die Achse, die durch die Lagerungsösen und Lagerungseinsätze des Lichtmoduls läuft, und in bezug auf die Achse, die rechteckig zu der erstgenannten Achse ist, angeordnet. Bei der bevorzugten Ausführung der Leuchte ist in der Richtung weg vom Gehäuse der laufende Kranz des Lichtmoduls auf seiner Innenoberfläche, und zwar in den Gebieten außerhalb des Gebiets der Aufstellung von Lagerungsösen des Gehäuses und Lagerungseinsätzen des Lichtmoduls, mit longitudinal verlaufenden Zähnen ausgerüstet, wobei mindestens ein Einrastungseinsatz zum einen aufliegend in der Eintiefung zwischen jeweils Nachbarzähnen und zum anderen eingerastet hinter der Einrastungstreppe des Kranzes vom Lichtmodul steif mit der Regulierungsmutter, die mit der Regulierungsschraube mitwirkt, verbunden ist. Die Regulierungsschraube ist rund ausgebildet, um ihre longitudinale Achse drehbar, aber in ihrer Achsenrichtung unbewegbar in der Lagerung aufgestellt, die steif mit dem Gehäuse der Leuchte verbunden ist. Dabei ist die Regulierungsschraube entweder parallel zur longitudinalen Achse des Gehäuses und auch mindestens - im Wesentlichen - parallel zur longitudinalen Achse des Lichtmoduls oder schräg unter einem vorgegebenen Winkel in bezug die longitudinale Achse des Gehäuses angeordnet. Das Regulierungsaggregat der Leuchte allein kann unter der Berücksichtigung der allen oben genannten Charakteristiken der Leuchte so konzipiert werden, dass mindestens ein Einrastungseinsatz, der in der Eintiefung zwischen jeweils Nachbarzähnen aufliegt und hinter der Einrastungstreppe des Kranzes eingerastet ist, vom Lichtmodul mit einer Regulierungsmutter steif verbunden ist, wobei die Regulierungsmutter mit einer Regulierungsschraube zusammenarbeitet. Diese Schraube ist um ihre longitudinale Achse drehbar, aber in ihrer Achsenrichtung unbewegbar ausgebildet und in der Lagerung aufgestellt, die steif mit dem Gehäuse der Leuchte verbunden ist. Dabei ist die Regulierungsschraube entweder parallel zur longitudinalen Achse oder schräg unter einem vorbestimmten Winkel in bezug auf die logitudinale Achse des Gehäuses angeordnet. Solche Ausführung eines Regulierungsaggregats ermöglicht die Positionierung eines Lichtmoduls in der Richtung vom Gehäuse gegen das Lichtmodul bzw. die Leuchte, die in das Fahrzeug eingebaut wird, und zwar normalerweise von der Außenseite.

In einer alternativen Ausführung ist das Regulierungsaggregat so konzipiert, dass der Einrastungseinsatz, der an einer verzahnten Oberfläche des Kranzes vom Lichtmodul aufliegt und hinter der Einrastungstreppe eingerastet ist, steif mit der Lagerung in der letzten, zwar drehbaren, aber in ihrer Achsenrichtung unbeweglichen Regulierungsschraube verbunden ist. Die Regulierungsschraube arbeitet mit der Regulierungsmutter zusammen, die steif mit dem Gehäuse der Leuchte verbunden ist. Solche Ausführung eines Regulierungsaggregates ermöglicht die Positionierung eines Lichtmoduls in der Richtung vom Gehäuse gegen das Lichtmodul bzw. die Leuchte, die in das Fahrzeug eingebaut wird, und zwar normalerweise von der Außenseite.

Bei einer anderen alternativen Ausführung des Regulierungsaggregats ist am Gehäuse der Leuchte eine Lagerung drehbar, aber in der Achsenrichtung unbeweglich, vorgesehen. Die Lagerung ist mit einer Kegelverzahnung ausgerüstet, und durch diese ist die Regulierungsschraube, die mit einer Regulierungsmutter zusammenarbeitet, eingedreht. Durch diese Regulierungsmutter ist der Einrastungseinsatz für die Verbindung der genannten Mutter mit dem Lichtmodul bzw. seinem Kranz steif verbunden. Solche Ausführung des Regulierungsaggregats ermöglicht die Positionierung des Lichtmoduls in der Querrichtung, und zwar in der Richtung, im Wesentlichen, rechteckig auf die longitudinale Achse des Lichtmoduls bzw. Gehäuses.

Ausführungsbeispiele der Erfindung werden im folgenden anhand der Zeichnungen näher dargestellt.
- Figur 1:: Kraftfahrzeugleuchte, vor allem Nebelscheinwerfer, im Raumblick von hinten,
- Figur 2:: Leuchte gemäß Figur 1 im Schnitt in der Ebene II - II gemäß Figur 1,
- Figur 3:: Erste alternative Ausführung der Leuchte im Schnitt in der Ebene II - II, gemäß Figur 1,
- Figur 4:: Zweite alternative Ausführung der Leuchte im Schnitt in der Ebene II - II gemäß Figur 1,
- Figur 5:: Dritte alternative Ausführung der Leuchte im Schnitt in der Ebene II - II gemäß 1.

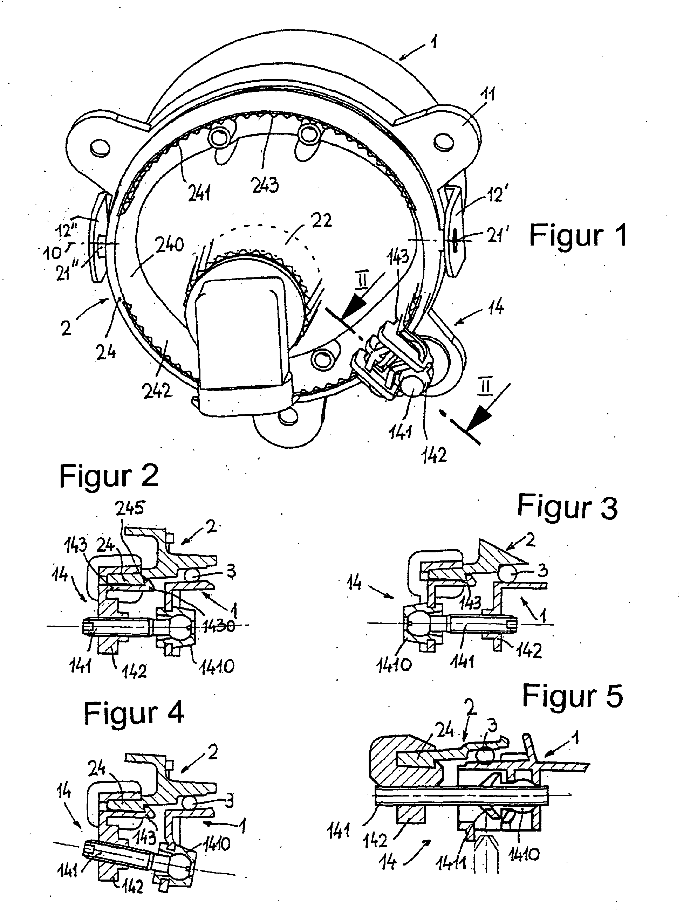

Figur 1 zeigt die Leuchte, die als Nebelscheinwerfer für Kraftfahrzeuge ausgeführt wird. Die Leuchte ist aus dem Gehäuse 1 und dem Lichtmodul 2 zusammengesetzt. Das Gehäuse 1 der Leuchte ist im gegebenen Fall hülsenförmig konzipiert und mit Befestigungsösen 11, die für den Einbau und die Befestigung des Gehäuses 1 auf die jeweils verfügbare Stelle des Fahrzeugs bestimmt sind, ausgerüstet. Weiter ist das Gehäuse 1 mit einander diametral gegenüber angeordneten Lagerungsösen 12', 12" ausgerüstet, in welchen auf die Art und Weise, die im Detail in der Fortsetzung beschrieben wird, das Lichtmodul 2 der Leuchte gelagert wird.

Mindestens ein Teil des Gehäuses 1 ist beim Fahrzeug von außen sichtbar und kann im Allgemeinen bei verschiedenen Fahrzeugen gleich oder wie z.B. in einigen Varianten zur Verfügung stehen. Diese Varianten unterscheiden sich in der Form, Farbe, Anordnung von Befestigungsösen 11, u. ä.

Das Lichtmodul 2 der Leuchte ist nach der Erfindung dem Einbau in das Gehäuse 1 angepasst und weist zum einem einen hülseförmigen mittleren Teil 22 auf, der für den Einbau der ungezeigten Glühlampe einschließlich mit den Teilen für die Stromversorgung vorgesehen ist, zum anderen auch mit einem röhrkonzipierten in der Richtung rückwärts bzw. seitlich vom Gehäuse 1 laufenden Kranz 24 auf. Für die Bedürfnisse des Einbaus in das Gehäuse 1 ist das Lichtmodul 2 mit diametral einander gegenüber angeordneten und zu sich selbst herausragenden Lagerungseinsätzen 21', 21" ausgerüstet. Diese Lagerungseinsätze 21', 21" sind in die genannte Ösenlagerung 12', 12" eingesetzt. Zwischen dem Gehäuse 1 und dem Lichtmodul 2 ist die sogenannte rollbewegliche Dichtung 3 (Figur 2 bis 5) eingesetzt. Dank des diesartigen Leuchtenkonzepts kann das Lichtmodul 2 wenigstens um bestimmten Winkel um die Querachse in bezug auf das Gehäuse 1 geneigt werden. Dabei kann das Lichtmodul 2 völlig unifiziert sein und ist sogar in die Gehäuse 1 verschiedener Formen von äußerlich sichtbaren Gebieten einsetzbar, unter der Bedingung, dass auch die Möglichkeit ihrer Einstellung bzw. Positionierung bei allen Fahrzeugen gesichert wird.

Gerade wegen der Einstellung bzw. Positionierung ist der oben genannte röhrförmig konzipierte Kranz 24 des Lichtmoduls 2 an seiner Innenoberfläche 240 in der Längsrichtung des Lichtmoduls 2 verzahnt ausgebildet. Im gegebenen Fall sind auf der Peripherie laufenden Innenoberfläche 240 des Lichtmoduls 2 von der Leuchte nach der Erfindung zwei verzahnte (oder gezogene) Gebiete 241, 242 vorgesehen, die visuell auch in Wirklichkeit an die Innenverzahnung erinnern. Die Gebiete 241, 242 werden diametral ein dem anderen gegenüber angeordnet bzw. symmetrisch in bezug auf die Achse 10, die die Abdrehbarkeit des Lichtmoduls 2 in bezug auf das Gehäuse 1 ermöglicht. Dabei ist jedes der Gebiete 241, 242 mit Zähnen 243 ausgerüstet, die parallel zu dem anderen in der Längsrichtung vom Lichtmodul 2 bzw. der Leuchte verlaufen, und zwar im gegebenen Fall in der Anordnung mit der Teilung 5° gesehen in der Peripherierichtung des Lichtmoduls 2 bzw. der Leuchte, und gleichzeitig auch in der Anordnung, die symmetrisch in bezug auf die vertikale und horizontale Ebene des Lichtmoduls 2 bzw. der Leuchte ist. Im gegebenen Fall bedeutet das, dass je zwölf Zähne 243 am oberen Gebiet 241 wie auf dem unteren Gebiet 242 der Innenoberfläche 24 des Kranzes 24 vom Lichtmodul 2 links und rechts von der vertikalen Achse zur Verfügung stehen. Der genannte, verzahnte und peripheral laufende Kranz 24 ist in der Richtung gegen das Innere des Lichtmoduls 2 auch mit der peripheral laufenden Treppe 245 abgeschlossen. Auf der anderen Seite ist am Gehäuse 1 der Leuchte nach der Erfindung das Regulierungsaggregat 14 befestigt. Das Aggregat wird im Detail in Figur 2 präsentiert und wird aus einer Regulierungsschraube 141 zusammengesetzt, die in diesem Fall drehbar ist, aber in ihrer Achsenrichtung unbeweglich in entsprechender Lagerung 1410 aufgestellt.

Ferner weist das Aggregat eine Regulierungsmutter 142 auf, die im vorliegenden Fall wenigstens mit einem Einrastungseinsatz 143 ausgerüstet wird. Der Einsatz liegt in der Vertiefung zwischen dem jeweils Nachbarzahn 243 am Kranz 24 des Lichtmoduls 2 der Leuchte auf. Er ist mit seinem Einrastungsgebiet 1430 hinter der Treppe 245 an der Innenoberfläche 240 vom Kranz 24 des Lichtmoduls 2 eingerastet.

Im gezeigten Beispiel in Figur 1 und in Figur 2 ist der Zugang zur Regulierungsschraube 141 auch von der Richtung des Gehäuses 1 möglich, d.h. beim Fahrzeug von der Außenseite. Mit der Drehung der Schraube 141 bewegt sich die Schraube in ihrer Achsenrichtung nicht. Deswegen soll sich die Mutter 142 mit einem Befestigungseinsatz 143 bewegen. Der Einsatz wird am Kranz 24 aufgestellt und verursacht die Bewegung des Lichtmoduls 2, nämlich die Abdrehung von diesem in bezug auf das Gehäuse 1 um die Querachse 10. Auf diese Art und Weise wird die Positionierung der Leuchte im Sinne der Aufstellung vom Lichtmodul 2 bei der in das Fahrzeug eingebauten Leuchte möglich und damit die Sicherung von entsprechenden optischen Charakteristiken der schon eingebauten Leuchte.

Figur 3 zeigt die Variante des Regulierungsaggregats 14, bei welchem der Zugang zur Regulierungsschraube 141 von der Gegenrichtung, d.h. von der Seite des Lichtmoduls 2 bzw.beim Fahrzeug von der Innenseite möglich ist. Zu diesem Zweck ist die Regulierungsmutter 142 im Gehäuse 1 eingebaut sowie und die Lagerung 1410 der Regulierungsschraube 141 durch den Einrastungseinsatz 1430 mit dem Lichtmodul 2 verbunden.

Da sich in diesem Fall die Schraube 141 in ihrer Achsenrichtung in der Lagerung 1410 nicht bewegen kann, bewegt sich die Schraube 141 während der Drehung in der Mutter 142 zusammen mit der Lagerung 1410. Zusammen mit dieser bewegt sich auch der Einrastungseinsatz 143. Ebenso verhält sich der Kranz 24 des Lichtmoduls 2, der in bezug auf das Gehäuse 1 der Leuchte um den bestimmten Winkel um die Achse 10 abgedreht ist.

Figur 4 zeigt eine weitere Variante des Regulierungsaggregats 14, bei welcher die Lage der im Gehäuse 1 aufgestellten Regulierungsmutter 142 wie auch in der Lagerung 1410 drehbar ist und in ihrer Achsenrichtung der unbeweglich aufgestellten Schraube 141 so ausgewählt wird, daß die Schraube 141 unter dem bestimmten Winkel in bezug auf die Längsachse des Lichtmoduls 2 bzw. des Gehäuses der Leuchte verläuft. Damit ist der Zugang zur Regulierungsschraube 141 von der anderen Seite, unter jeweils ausgewähltem Winkel α in bezug auf die Längsachse der Leuchte, ausführbar.

Figur 5 zeigt eine Variante, bei welcher die Lagerung 1410 für die Schraubenlagerung 141 mit einer kegelförmigen Verzahnung ausgerüstet wird. Damit ist die Abdrehung der Regulierungsschraube 141 mit dem Zugang aus der Querrichtung, d.h. wenigstens im Wesentlichen rechteckig in bezug auf die Achse der Schraube 141 möglich. Die Schraubenachse steht bei dieser Variante in der Funktion der Schraubenspindel zur Verfügung; mit Hilfe dieser wird bei der Drehung der Schraube 141 die Bewegung des Lichtmoduls 2 in bezug auf das Gehäuse 2 der Leuchte erreicht.

## Patentansprüche

1. Leuchte für Kraftfahrzeuge, insbesondere ein Nebelscheinwerfer, mit einem Gehäuse (1) und einem in das Gehäuse (1) einsetzbaren Lichtmodul (2), wobei zwischen dem Gehäuse (1) einerseits, das mit Befestigungsösen (11) oder ähnlichen Elementen für die Befestigung der Leuchte auf die jeweils entsprechende Stelle im Fahrzeug wie auch mit diametral gegenüber angeordneten Lagerungsösen (12', 12") ausgerüstet ist, und dem Lichtmodul (2) andererseits, das mit in der Richtung rückwärts bzw. seitlich vom Gehäuse (1) verlaufenden röhrig ausgebildeten Kranz (24) ausgerüstet ist mit zwei diametral angeordneten und zu sich selbst herausragenden und in die genannten Lagerungsösen (12', 12") des Gehäuses (1) in der selben Achse (10) aufstellbaren Lagerungseinsätzen (21', 21"), ein O-Ring als rollbewegliche Dichtung (3) vorgesehen ist und dass an jeweils entsprechend ausgewählter Stelle der Peripherie der Leuchte außer dem Gebiet der Aufstellung von Lagerungsösen (12', 12") des Gehäuses (1) und Lagerungseinsätzen (21', 21 ") des Lichtmoduls (2) ein durch die Lagerungsösen (12', 12") des Gehäuses (1) und Lagerungseinsätze (21', 21") des Lichtmoduls (2) verlaufendes Regulierungsaggregat (14) für die Neigung des Lichtmoduls (2) in Bezug auf das Gehäuse (1) um die Achse (10) vorgesehen ist, **dadurch gekennzeichnet, dass** der in der Richtung seitlich vom Gehäuse (1) verlaufende Kranz (24) des Lichtmoduls (2) an seiner Innenoberfläche (140) verzahnt ist und/oder mit längslaufenden Zähnen (243) ausgerüstet ist und dass das Regulierungsaggregat (14) mindestens eine Regulierungsschraube (141), eine Regulierungsmutter (142) und einen Einrastungseinsatz (143), der im Aufliegen am Kranz (24) des Lichtmoduls (2) und eingerastet hinter der Einrastungstreppe (245) des genannten Kranzes (24) der gegenseitigen Bewegung der Regulierungsschraube (141) und der Regulierungsmutter (142) folgt, aufweist.

2. Leuchte nach Anspruch 1, **dadurch gekennzeichnet, dass** sich am Kranz (24) des Lichtmoduls (2), insbesondere an seiner zylindrischen Innenoberfläche (140), diametral gegenüber existierende verzahnte Gebiete (241, 242), befinden, die symmetrisch in bezug auf die durch Lagerungsösen (12', 12") des Gehäuses (1) und Lagerungseinsätze (21', 21") des Lichtmoduls (2) verlaufende Achse (10), wie auch in bezug auf die Achse, die rechteckig auf die früher genannte Achse (10) ist.

3. Leuchte nach Anspruch 1, **dadurch gekennzeichnet, dass** am Kranz (24) des Lichtmoduls (2), vorrangig an seiner zylindrischen Innenoberfläche (140), diametral einander angeordnete verzahnte Gebiete (241, 242) mindestens ein Drittel der Kranzperipherie decken (24) und dass sie symmetrisch in bezug auf die Achse (10) sind, die durch die Lagerungsösen (12', 12") des Gehäuses (1) und Lagerungseinsätze (21', 21") des Lichtmoduls (2) verläuft, wie auch in bezug auf die Achse, die rechteckig auf die früher genannte Achse (10) ist.

4. Leuchte nach Anspruch 1, **dadurch gekennzeichnet, dass** der in der Richtung seitlich vom Gehäuse (1) laufende Kranz (24) des Lichtmoduls (2) an seiner Innenoberfläche (140), und zwar in den Gebieten (241, 242) außer dem Gebiet der Aufstellung von Lagerungsösen (12', 12") des Gehäuses (1) und Lagerungseinsätze (21', 21") des Lichtmoduls (2) mit längslaufenden Zähnen (243) ausgerüstet wird, wobei mindestens ein Einrastungseinsatz (143), aufliegend in der Eintiefung zwischen jeweils Nachbarzähnen (143) und eingerastet hinter der Einrastungstreppe (245) vom Kranz (24) des Lichtmoduls (2) steif mit Regulierungsmutter (142) verbunden ist. Die Regulierungsmutter wirkt zusammen mit der Regulierungsschraube (141), die um ihre Längsachse abdrehbar ist, aber in ihrer Achsenrichtung unbeweglich in die Lagerung (1410) aufgestellt wird, die steif mit dem Gehäuse (1) der Leuchte verbunden ist.

5. Leuchte nach Anspruch 4, **dadurch gekennzeichnet, dass** die Regulierungsschraube (141) parallel zur Längsachse des Gehäuses (1) und auch mindestens im Wesentlichen parallel zur Längsachse der Lichtmoduls (2) von der Leuchte angeordnet wird.

6. Leuchte nach Anspruch 4, **dadurch gekennzeichnet, dass** die Regulierungsschraube (141) schräg unter im voraus bestimmten Winkel (α) in bezug auf die Längsachse des Gehäuses (1) von der Leuchte angeordnet wird.

7. Leuchte nach Anspruch 1, **dadurch gekennzeichnet, dass** das Regulierungsaggregat (14) so konzipiert wird, dass mindestens ein Einrastungseinsatz (143), aufliegend in der Eintiefung zwischen jeweils Nachbarzähnen (143) und eingerastet hinter der Einrastungstreppe (245) des Kranzes (24) vom Lichtmodul (2), steif mit Regulierungsmutter (142) verbunden ist. Diese Regulierungsmutter wirkt zusammen mit der Regulierungsschraube (141), die um ihre Längsachse abdrehbar ist, aber in ihrer Achsenrichtung unbeweglich in der Lagerung (1410) aufgestellt wird. Diese Lagerung ist steif mit dem Gehäuse (1) der Leuchte verbunden, wobei die Regulierungsschraube (141) entweder parallel zur Parallelachse des Gehäuses (1) oder schräg unter im Voraus bestimmten Winkel (α) in bezug auf die Längsachse des Gehäuses (1) verbunden ist.

8. Leuchte nach Anspruch 1, **dadurch gekennzeichnet, dass** das Regulierungsaggregat (14) so konzipiert wird, dass der Einrastungseinsatz (143), aufliegend an der verzahnten Oberfläche (240) des Kranzes (24) vom Lichtmodul (2) und eingerastet hinter der Einrastungstreppe (245), steif mit der Lagerung (1410) verbunden ist in der Lagerung zwar abdrehbar, aber in ihrer Achsenrichtung unbeweglicher Regulierungsschraube (141), die mit Regulierungsmutter (142) mitwirkt, die steif mit dem Gehäuse (1) der Leuchte verbunden ist.

9. Leuchte nach Anspruch 1, **dadurch gekennzeichnet, dass** das Regulierungsaggregat (14) so konzipiert wird, dass am Gehäuse (1) der Leuchte abdrehbare, aber in Achsenrichtung unbewegliche Lagerung (1410') vor gesehen wird, die mit einer Kegelverzahnung (1411) ausgerüstet wird und durch welche die Regulierungsschraube (141) eingedreht wird, die mit der Regulierungsmutter (142) mitwirkt, mit welcher der Einrastungseinsatz (143) für die Verbindung der genannten Mutter (142) mit dem Lichtmodul (2) bzw. seinem Kranz (24) steif verbunden ist.

10. Leuchte nach Anspruch 5, **dadurch gekennzeichnet, dass** die Regulierungsschraube (141) in der Richtung vom Gehäuse (1) gegen das Lichtmodul (2), mindestens ungefähr parallel zur Längsachse des Gehäuses (1) bzw. des Lichtmoduls (2) der Leuchte, steuerbar ist.

11. Leuchte nach Anspruch 6, **dadurch gekennzeichnet, dass** die Regulierungsschraube (141) in der Richtung vom Gehäuse (1) gegen das Lichtmodul (2), und zwar schräg unter dem bestimmten Winkel (α) in bezug auf die Längsachse des Gehäuses (1) bzw. des Lichtmoduls (2) von der Leuchte, steuerbar ist.

12. Leuchte nach Anspruch 8, **dadurch gekennzeichnet, dass** die Regulierungsschraube (141) in der Richtung vom Lichtmodul (2) gegen das Gehäuse (1) steuerbar ist.

13. Leuchte nach Anspruch 9, **dadurch gekennzeichnet, dass** die Regulierungsschraube (141), laufend mindestens im Wesentlichen parallel zur Längsrichtung des Lichtmoduls (2) und des Gehäuses (1) von der Leuchte, in der Querrichtung, nämlich in der Richtung rechteckig auf die Längsrichtung des Lichtmoduls (2) und des Gehäuses (1) der Leuchte, steuerbar ist.

## Claims

1. Lamp for motor vehicles, in particular a front fog light with a housing (1) and a lighting module (2) that is installed in the housing, whereby an O ring is provided as a rolling seal (3) between the housing (1) on the one side, which is equipped with fastening eyelets (11) or similar elements for fastening the lamp to the corresponding point in the vehicle and with diametrically opposed bearing eyelets (12' 12"), and the lighting module (2) on the other side, which is fitted with a tube-shaped rim (24) running from the back and/or side of the housing with two diametrically arranged bearing inserts (21' 21"), which extend towards each other and can be inserted into the aforementioned bearing eyelets (12' 12") of the housing (1) in the same axis (10), and a control unit (14) is provided at a correspondingly selected point on the periphery of the lamp, away from the bearing eyelet (12' 12") mounting on the housing (1) and the bearing inserts (21' 21") of the lighting module (2), which runs through the bearing eyelets (12' 12") of the housing (1) and the bearing inserts (21' 21 ") of the lighting module (2) and is used to tilt the lighting module (2) relative to the housing (1) around the axis (10), **characterized by** the fact that the rim (24) of the lighting module (2) that runs alongside the housing (1) has a toothed inner surface (140) and/or is fitted with longitudinally arranged teeth (243), and that the control unit (14) has at least one regulating screw (141), one regulating nut (142) and one locking insert (143), which rests on the rim (24) of the lighting module (2) and is locked into place behind the staggered lock (245) of the aforementioned rim (24) and which tracks the reciprocal movement of the regulating screw (141) and the regulating nut (142).

2. Lamp as defined in Claim 1, **characterized by** the diametrically opposed knurled areas (241,242) on the rim (24) of the lighting module (2), and particularly on its cylindrical inner surface (140), which are symmetrical relative to the axis (10) that runs through the bearing eyelets (12', 12") of the housing (1) and the bearing inserts (21' 21 ") of the lighting module (2) and relative to the axis at right angles to the aforementioned axis (10).

3. Lamp as defined in Claim 1, **characterized by** the fact that diametrically opposed knurled areas (241,242) on the rim (24) of the lighting module (2), and mainly on its cylindrical inner surface (140), cover at least one third of the rim periphery (24) and are symmetrical relative to the axis (10) that runs through the bearing eyelets (12', 12") of the housing (1) and the bearing inserts (21' 21 ") of the lighting module (2) and relative to the axis at right angles to the aforementioned axis (10).

4. Lamp as defined in Claim 1, **characterized by** the fact that the rim (24) of the lighting module (2), which runs alongside the housing (1) is fitted with longitudinally arranged teeth (243) on its inner surface (140) in the areas (241, 242) away from the mounting area of the bearing eyelets (12' 12") of the housing (1) and the bearing inserts (21' 21 ") of the lighting module (2), whereby at least one locking insert (143), which rests in the groove between two adjacent teeth (143) and is locked into place behind the staggered lock (245) of the rim (24) of the lighting module (2), is rigidly connected to the regulating nut (142). The regulating nut acts together with the regulating screw (141), which can be rotated around its longitudinal axis but is immovably fixed in one axis direction in the bearing (1410) that is rigidly connected to the lamp housing (1).

5. Lamp as defined in Claim 4, **characterized by** the fact that the regulating screw (141) is arranged parallel to the longitudinal axis of the housing (1) and - at least substantially - parallel to the longitudinal axis of the lighting module (2) of the lamp.

6. Lamp as defined in Claim 4, **characterized by** the fact that the regulating screw (141) is arranged at a previously defined angle (α) relative to the longitudinal axis of the housing (1) of the lamp.

7. Lamp as defined in Claim 1, **characterized by** the fact that the control unit (14) is designed to ensure that at least one locking insert (143), which rests in the groove between two adjacent teeth (143) and is locked into place behind the staggered lock (245) of the rim (24) of the lighting module (2), is rigidly connected to the regulating nut (142). The regulating nut acts together with the regulating screw (141), which can be rotated around its longitudinal axis but is immovably fixed in one axis direction in the bearing (1410). This bearing is rigidly connected to the housing (1) of the lamp, whereby the regulating screw (141) is either connected parallel to the parallel axis of the housing (1) or at a previously defined angle (α) relative to the longitudinal axis of the housing (1).

8. Lamp as defined in Claim 1, **characterized by** the fact that the design of the control unit (14) ensures that the locking insert (143), which rests on the knurled surface (240) of the rim (24) of the lighting module (2), is locked into place behind the staggered lock (245), and is rigidly connected to the bearing (1410) and to a regulating screw (141), which can be turned in the bearing but is immovably fixed in one axis direction, and which acts together with a regulating nut (142), which is rigidly connected to the housing (1) of the lamp.

9. Lamp as defined in Claim 1, **characterized by** the fact that the design of the control unit (14) ensures that a bearing (1410) provided on the housing (1) of the lamp can be turned but not moved in any other axis direction, and is fitted with tapered toothing (1411) through which the regulating screw (141) is inserted, which in turn acts together with the regulating nut (142), to which the locking insert (143) for connecting the aforementioned nut (142) with the lighting module (2) and/or the rim (24) of the same is rigidly connected.

10. Lamp as defined in Claim 5, **characterized by** the fact that the regulating screw (141) can be controlled in the direction from the housing (1) towards the lighting module (2) at least approximately parallel to the longitudinal axis of the housing (1) and/or the lighting module (2) of the lamp.

11. Lamp as defined in Claim 6, **characterized by** the fact that the regulating screw (141) can be controlled in the direction from the housing (1) towards the lighting module (2) at a defined angle (α) relative to the longitudinal axis of the housing (1) and/or the lighting module (2) of the lamp.

12. Lamp as defined in Claim 8, **characterized by** the fact that the regulating screw (141) can be controlled in the direction from the lighting module (2) towards the housing (1).

13. Lamp as defined in Claim 9, **characterized by** the fact that the transverse direction of the regulating screw (141), which runs at least substantially parallel to the longitudinal direction of the lighting module (2) and the housing (1) of the lamp, can be controlled, specifically in the direction that is at right angles to the longitudinal direction of the lighting module (2) and the housing (1) of the lamp.

## Revendications

1. Projecteur pour véhicules automobiles, surtout un projecteur antibrouillard, avec un boîtier (1) et un module de lumière (2) montable sur le boîtier (1), et un joint torique étant prévu comme joint rotatif entre le boîtier (1) d'un coté et le module de lumière (2) de l'autre coté, le boîtier (1) étant équipé des anneaux de fixation (11) ou des éléments similaires pour la fixation du projecteur sur la position correspondante au véhicule et également équipé des anneaux de positionnement (12', 12") positionnés face à face de manière diamétrale, le module de lumière (2) étant équipé d'un anneau (24) sous forme d'un tuyau en direction arrière ou bien latérale au boîtier (1), avec deux inserts de positionnement (21', 21") diamétraux et en saillie pour la mise dans les anneaux de positionnement (12', 12") précités du boîtier (1) qui peuvent être installés sur le même axe (10) et que sur une position choisie de la périphérie du projecteur à part la zone pour l'installation des anneaux de positionnement (12', 12") du boîtier (1) et des inserts de positionnement (21', 21") du module de lumière (2) un ensemble de réglage (14) passant par les anneaux de positionnement (12', 12") du boîtier (1) et les inserts de positionnement (21', 21") du module de lumière (2) est prévu pour l'inclinaison du module de lumière (2) par rapport au boîtier (1) autour de l'axe (10), **caractérisé en ce que** l'anneau (24) du module de lumière (2) passant latéralement au boîtier (1) est en prise sur sa surface intérieure (140) et/ou équipé des dents longitudinales (243) et que l'ensemble de réglage (14) présente au moins une vis de réglage (141), un écrou de réglage (142) et un insert d'accrochage (143) qui suit le mouvement réciproque de la vis de réglage (141) et de l'écrou de réglage (142) s'appuyant sur l'anneau (24) du module de lumière (2) et accroché derrière des dents d'accrochage (245) de l'anneau (24) cité.

2. Projecteur selon la revendication 1, **caractérisé en ce que** sur l'anneau (24) du module de lumière (2), surtout sur sa surface intérieure cylindrique, se trouvent des zones en prise (241, 242) diamétrales face à face, symétrique par rapport à l'axe (10) passant par les anneaux de positionnement (12', 12") du boîtier (1) et les inserts de positionnement (21', 21 ") du module de lumière (2) et également par rapport à l'axe rectangulaire à l'axe (10) précité.

3. Projecteur selon la revendication 1, **caractérisé en ce que** les zones en prise (241, 242) diamétrales les unes par rapport aux autres sur l'anneau (24) du module de lumière (2), de préférence sur la surface intérieure cylindrique (14) couvrent au moins un tiers de la périphérie de l'anneau (24) et qu'elles sont symétriques par rapport à l'axe (10) qui passe par les anneaux de positionnement (12', 12") du boîtier (1) et les inserts de positionnement (21', 21 ") du module de lumière (2) comme également par rapport à l'axe rectangulaire à l'axe (10) précité.

4. Projecteur selon la revendication 1, **caractérisé en ce que** l'anneau (24) du module de lumière (2) passant en direction latérale du boîtier (1) sur sa surface intérieure (140) à savoir dans les zones (241, 242) à part la zone pour l'installation des anneaux de positionnement (12', 12") du boîtier (1) et des inserts de positionnement (21', 21 ") du module de lumière (2) est équipé des dents longitudinales (243), au moins un insert d'accrochage (143) appuyé respectivement sur le creux entre les dents voisines (143) et accroché derrière des dents d'accrochage (245) de l'anneau (24) du module de lumière (2) étant relié de manière raide avec l'écrou de réglage (142). L'écrou de réglage est en interaction avec la vis de réglage (141) qui peut être dévissée autour de son axe longitudinal mais qui est monté de façon immobile sur le palier (1410) dans sa direction de l'axe qui est relié de manière raide avec le boîtier (1) du projecteur.

5. Projecteur selon la revendication 4, **caractérisé en ce que** la vis de réglage (141) est parallèle à l'axe longitudinale du boîtier (1) et au moins essentiellement parallèle à l'axe longitudinal du module de lumière (2) du projecteur.

6. Projecteur selon la revendication 4, **caractérisé en ce que** la vis de réglage (141) est disposée de manière oblique dans un angle (α) prédéterminé par rapport à l'axe longitudinal du boîtier (1) du projecteur.

7. Projecteur selon la revendication 1, **caractérisé en ce que** l'ensemble de réglage (14) est conçu tel qu'au moins un insert d'accrochage (143) appuyé respectivement sur le creux entre les dents voisines (143) et accroché derrière des dents d'accrochage (245) de l'anneau (24) du module de lumière (2) est relié de manière raide avec l'écrou de réglage (142). Cet écrou de réglage est en interaction avec la vis de réglage (141) qui peut être dévissée autour de son axe longitudinal mais qui est montée de façon immobile sur le palier (1410) dans sa direction de l'axe. Ce palier est relié de manière raide avec le boîtier (1) du projecteur, la vis de réglage (141) étant reliée en parallèle à l'axe parallèle du boîtier (1) ou de manière oblique dans un angle (α) prédéterminé par rapport à l'axe longitudinal du boîtier (1).

8. Projecteur selon la revendication 1, **caractérisé en ce que** l'ensemble de réglage (14) est conçu tel que l'insert d'accrochage (143) appuyé sur la surface en prise (20) de l'anneau (24) du module de lumière (2) et accroché derrière des dents d'accrochage (245) est relié de manière raide avec le palier (1410), dévissable dans le palier, mais avec une vis de réglage (141) immobile dans sa direction de l'axe, qui est en interaction avec l'écrou de réglage (142) relié de manière raide avec le boîtier (1) du projecteur.

9. Projecteur selon la revendication 1, **caractérisé en ce que** l'ensemble de réglage (14) est conçu tel qu'un palier (1410') est prévu sur le boîtier (1) du projecteur qui est dévissable mais immobile dans la direction de l'axe qui est disposé d'une denture conique (1411) et par lequel la vis de réglage (141) sera insérée qui est en interaction avec l'écrou de réglage (142) avec lequel l'insert d'accrochage (143) est relié de manière raide pour la liaison de l'écrou précité (142) avec le module de lumière (2) respectivement son anneau (24).

10. Projecteur selon la revendication 5, **caractérisé en ce que** la vis de réglage (141) est pilotable dans la direction du boîtier (1) vers le module de lumière (2) au moins à peu près parallèle à l'axe longitudinale du boîtier (1) respectivement du module de lumière (2) du projecteur.

11. Projecteur selon la revendication 6, **caractérisé en ce que** la vis de réglage (141) est pilotable dans la direction du boîtier (1) vers le module de lumière (2) à savoir de manière oblique dans un angle (α) déterminé par rapport à l'axe longitudinal du boîtier (1) respectivement du module de lumière (2) du projecteur.

12. Projecteur selon la revendication 8, **caractérisé en ce que** la vis de réglage (141) est pilotable dans la direction du module de lumière (2) vers le boîtier (1).

13. Projecteur selon la revendication 9, **caractérisé en ce que** la vis de réglage (141) est pilotable en permanence au moins essentiellement parallèle à la direction longitudinale du module de lumière (2) et du boîtier (1) du projecteur, en direction transversale, c'est-à-dire en direction rectangulaire sur la direction longitudinale du module de lumière (2) et du boîtier (1) du projecteur.
